# EUROPEAN PATENT APPLICATION

(11) **EP 4 737 494 A1**
(43) Date of publication of application: **06.05.2026**
(21) Application number: 24831720.8
(22) Date of filing: 14.06.2024
(51) Int. Cl.: C08F 290/14, C08F 290/06, G02C 7/00

(54) **COMPOSITION AND EYEGLASS LENS**

(30) Priority: 30.06.2023 JP 2023108091
(71) Applicant: Nikon-Essilor Co., Ltd., Tokyo 130-0026 (JP)
(72) Inventor: IGAMI, Yuka, Tokyo 130-0026 (JP)
(74) Representative: Hoffmann Eitle
(86) International application number: PCT/JP2024/021677
(87) International publication number: WO 2025/004856

(57) **Abstract**

An object of the present disclosure is to provide a composition capable of forming a layer having excellent interlayer adhesion. The composition of the present disclosure includes a polymer S of silsesquioxane having a polymerizable group; and a compound X selected from the group consisting of a monomer M and a polymer P of the monomers M, wherein the monomer M is selected from the group consisting of polyalkylene glycol di(meth)acrylate and urethane (meth)acrylate, in a molecular weight distribution curve of the polymer S obtained by gel permeation chromatography, the peak top molecular weight of the polymer S is 2800 or more, and in a molecular weight distribution curve of the polymer P obtained by gel permeation chromatography, the peak top molecular weight of the polymer P is 3500 or more.

## Description

### TECHNICAL FIELD

The present disclosure relates to a composition and a spectacle lens.

### BACKGROUND ART

Patent Literature 1 discloses a copolymer containing both segments of a segment (A) containing a repeating unit of a silicone structure represented by general formula (1) and a segment (B) containing a repeating unit having a cage silsesquioxane structure represented by general formula (2) in a side chain.

### CITATION LIST

### PATENT LITERATURE

Patent Literature 1: JP 2006-265514 A

### SUMMARY OF INVENTION

The present disclosure relates to a composition containing a polymer S of silsesquioxane having a polymerizable group, and a compound X selected from the group consisting of a monomer M and a polymer P of the monomers M, in which the monomer M is selected from the group consisting of polyalkylene glycol di(meth)acrylate and urethane (meth)acrylate, in a molecular weight distribution curve of the polymer S obtained by gel permeation chromatography, the peak top molecular weight of the polymer S is 2800 or more, and in a molecular weight distribution curve of the polymer P obtained by gel permeation chromatography, the peak top molecular weight of the polymer P is 3500 or more (hereinafter, also referred to as "the composition of the first embodiment".).

The present disclosure also relates to a composition containing silsesquioxane having a polymerizable group; and a polymer P of monomers M selected from the group consisting of polyalkylene glycol di(meth)acrylate and urethane (meth)acrylate, in which, in a molecular weight distribution curve of the polymer P obtained by gel permeation chromatography, the peak top molecular weight of the polymer P is 3500 or more (hereinafter, also referred to as "the composition of the second embodiment".).

### BRIEF DESCRIPTION OF DRAWINGS

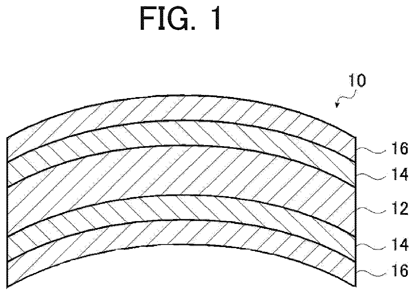

Fig. 1 is an example showing a cross section of a spectacle lens.

### DESCRIPTION OF EMBODIMENTS

Hereinafter, the composition of the present disclosure will be described **in** detail.

The composition of the present disclosure is preferably used, for example, for forming a hard coat layer of a spectacle lens.

A layer formed using the composition of the present disclosure (for example, a hard coat layer) has excellent interlayer adhesion. Specifically, the interlayer adhesion means that when a hard coat layer is formed on a substrate using the composition of the present disclosure, the hard coat layer is hardly peeled off from the substrate, or when another layer (for example, a primer layer) is formed on the substrate and a hard coat layer is further formed on another layer using the composition of the present disclosure, the hard coat layer is hardly peeled off from the substrate.

In the present specification, "to" means including numerical values described before and after the "to" as a lower limit value and an upper limit value.

In the present specification, examples of the halogen atom include a fluorine atom, a chlorine atom, a bromine atom, and an iodine atom.

In the present specification, examples of the halogenation include fluorination, chlorination, bromination, and iodination.

In the present specification, "(meth)acryl" is a concept including both acryl and methacryl, "(meth)acryloyl group" is a concept including both an acryloyl group and a methacryloyl group, and "(meth)acrylate" is a concept including both acrylate and methacrylate.

In the present specification, the solid content is a component other than the solvent, and is calculated as a solid content even **if** the property of the component is liquid at normal temperature and normal pressure (25°C, 101.3 kPa). Also, the solid content may be a component that chemically changes **in** the course of the curing treatment.

However, when a composition and a mixture for living polymerization described later contain a specific compound selected from the group consisting of a surfactant that is liquid at normal temperature and normal pressure, a living polymerization catalyst that is liquid at normal temperature and normal pressure, and a co-catalyst that is liquid at normal temperature and normal pressure, the solid content of the composition and the mixture for living polymerization described later do not contain the specific compound. For example, in a composition including only the polymer S, the monomer X, the surfactant that is liquid at normal temperature and normal pressure, and a solvent, only the polymer S and the monomer X correspond to the solid content of the composition.

Hereinafter, the first embodiment and the second embodiment will be described in detail.

### [First Embodiment]

The composition of the first embodiment is a composition containing a polymer S of silsesquioxane having a polymerizable group, and a compound X selected from the group consisting of a monomer M and a polymer P of the monomers M, in which the monomer M is selected from the group consisting of polyalkylene glycol di(meth)acrylate and urethane (meth)acrylate, in a molecular weight distribution curve of the polymer S obtained by gel permeation chromatography, the peak top molecular weight of the polymer S is 2800 or more, and in a molecular weight distribution curve of the polymer P obtained by gel permeation chromatography, the peak top molecular weight of the polymer P is 3500 or more.

In other words, the composition of the first embodiment contains the polymer S and the monomer M, or contains the polymer S and the polymer P. In addition, the composition of the first embodiment may contain the polymer S, the monomer M, and the polymer P.

### <Polymer S>

The composition of the first embodiment contains the polymer S.

The polymer S is a polymer of silsesquioxane having a polymerizable group. The polymer S is preferably a polymer obtained by polymerization via a polymerizable group of the silsesquioxane.

The polymer S is a so-called prepolymer, and is a polymer that can be further cured by a curing treatment such as a light irradiation treatment when a hard coat layer is formed.

The polymer S preferably has a polymerizable group. Examples of the polymerizable group of the polymer S include, among the polymerizable groups of the silsesquioxane having a polymerizable group, the polymerizable group remaining when the polymer S is formed.

In a molecular weight distribution curve of the polymer S obtained by gel permeation chromatography (GPC), the peak top molecular weight of the polymer S is 2,800 or more, preferably 3,000 or more, more preferably 4,000 or more, and still more preferably 5,000 or more. The upper limit is preferably 1,000,000 or less, more preferably 500,000 or less, and still more preferably 10,000 or less.

When the polymer S has a plurality of peak top molecular weights, it is preferable that at least one of the plurality of peak top molecular weights satisfies the above peak top molecular weight range, and it is more preferable that all the peak top molecular weights satisfy the above peak top molecular weight range.

The peak top molecular weight of the polymer S can be measured by the following method.

First, the polymer S is dissolved in a solvent to prepare a measurement solution. Also, the measurement solution may be a solution obtained by living polymerization of a mixture for living polymerization described later. The solvent may be a solvent in which the polymer S is dissolved, and a solvent that can be contained in a solution obtained by living polymerization of a mixture for living polymerization described later is preferable.

Subsequently, the molecular weight is measured using a GPC analyzer under the following conditions, the molecular weight at each elution time is calculated from the obtained retention time by the elution curve of monodisperse polystyrene, and then the peak top molecular weight of the polymer S is determined from a molecular weight distribution curve obtained by creating the molecular weight distribution curve.
GPC analyzer: HLC-8420GPC manufactured by Tosoh Corporation
Column: Two column, SuperMultipore HZ-M and guard column manufactured by Tosoh Corporation, are connected in series
Column temperature: 40°C
Mobile phase: chloroform 1.0 mL/min
Sample concentration: 0.2 mass%
Temperature: oven 40°C, injection port 35°C, detector 35°C
Detector: differential refractometer

In the molecular weight distribution curve of the polymer S obtained by the GPC method, the molecular weight of the polymer S is preferably in a region of 2,000 or more, more preferably in a region of 3,000 or more, and still more preferably in a region of 4,000 or more. The upper limit is preferably in a region of 70,000,000 or less, more preferably in a region of 2,000,000 or less, still more preferably in a region of 1,000,000 or less, particularly preferably in a region of 30,000 or less, and most preferably in a region of 20,000 or less.

Examples of the method for adjusting the molecular weight of the polymer S include known methods, and in the method for living polymerization using the mixture for living polymerization described later, it is preferable to set the type and content of the polymerization initiator, the type and content of the catalyst or co-catalyst, the reaction time, and the reaction temperature to preferred embodiments described later.

Examples of the polymerizable group of the silsesquioxane include a radically polymerizable group and a cationically polymerizable group. The radically polymerizable group is preferably a (meth)acryloyl group. Examples of the cationically polymerizable group include alicyclic ether groups such as an epoxy group and an oxetanyl group, a cyclic acetal group, a cyclic lactone group, a cyclic thioether group, a spiroorthoester group, and a vinyloxy group, and an epoxy group or an oxetanyl group is preferable.

The number of polymerizable groups **in** the silsesquioxane is preferably 2 or more, and more preferably 2 to 10.

Silsesquioxane is a silane compound obtained by hydrolyzing a trifunctional silane compound such as alkoxysilane, chlorosilane, and silanol.

Examples of the structure of the silsesquioxane include an irregular form such as a random structure, a ladder structure, a cage (completely condensed cage) structure, and an incomplete cage structure (a partially cleaved structure of a cage structure having a structure **in** which some of the silicon atoms are lacking from the cage structure and a structure **in** which some of the silicon-oxygen bonds of the cage structure are cleaved).

The silsesquioxane having a polymerizable group is preferably a compound having a basic skeleton represented by formula (Q).

R^{Q}-SiO_{3/2} (Q)

In the formula (Q), R^{Q} represents a monovalent organic group, and at least one represents a polymerizable group or a group having a polymerizable group.

The group having a polymerizable group is preferably an -alkylene group-O-polymerizable group. The number of carbon atoms in the alkylene group is preferably 1 to 10, and more preferably 1 to 5.

The polymerizable group is preferably the polymerizable group of the silsesquioxane described above.

Examples of the silsesquioxane having a polymerizable group include SQ series (for example, AC-SQ series and MAC-SQ series manufactured by Toagosei Co., Ltd.).

The average particle size of the silsesquioxane having a polymerizable group is preferably 0.5 to 200 nm, and more preferably 1 to 50 nm.

Examples of the method for measuring the average particle size include a method in which the particle sizes of any 100 silsesquioxane having a polymerizable group are measured using a scanning electron microscope and arithmetically averaged, and a method in which the average particle size is measured under the following conditions using a dynamic light scattering method.
Measuring device: zeta-potential & particle size analyzer ELS-Z2 (manufactured by Otsuka Electronics Co., Ltd.)
Measurement cell: particle size cell unit (scattering angle 165°)
Measurement temperature: 25°C
Particle size analysis method: Contin method

At the time of measurement, a dispersion containing silsesquioxane having a polymerizable group to be measured is diluted with a diluent solvent as necessary. As the diluent solvent, for example, when MEK (methyl ethyl ketone) is used and problems such as aggregation of silsesquioxane having a polymerizable group occur due to the use of MEK, another appropriate diluent solvent is used. Also, in the present disclosure, unless otherwise specified, the average particle size means an average particle size on a volume distribution basis.

The silsesquioxane having a polymerizable group may be used alone as one kind, or two or more kinds thereof may be used.

Examples of the method for producing the polymer S include known polymerization methods such as living polymerization, and living polymerization is preferable.

Examples of the living polymerization include living radical polymerization such as atom transfer radical polymerization using a mixture for living polymerization.

### (Mixture for living polymerization)

The mixture for living polymerization contains silsesquioxane having a polymerizable group.

The mixture for living polymerization preferably further contains at least one selected from the group consisting of a living polymerization catalyst, a polymerization initiator, a solvent, and a co-catalyst, and more preferably further contains a living polymerization catalyst, a polymerization initiator, a solvent, and a co-catalyst.

The silsesquioxane having a polymerizable group is as described above.

The content of the silsesquioxane having a polymerizable group is preferably 10 to 90 mass%, and more preferably 20 to 70 mass% with respect to the total solid content of the mixture for living polymerization.

Examples of the living polymerization catalyst include transition metals and transition metal compounds.

Examples of the transition metal in the transition metal and the transition metal compound include copper, iron, cobalt, chromium, manganese, molybdenum, silver, zinc, palladium, rhodium, platinum, ruthenium, iridium, ytterbium, samarium, rhenium, and nickel, and copper, iron, or ruthenium is preferable.

The transition metal compound may be a transition metal complex composed of the transition metal and a ligand.

As the living polymerization catalyst, copper, a copper compound such as ferrocene, iron, or an iron compound such as ferrocene is preferable.

The living polymerization catalyst is preferably a compound represented by formula (F1) or a compound represented by formula (F2).

CP¹-M-CP² (F1)

CP¹-Fe- (R^{Q})₃ (F2)

In the formula (F1), M represents copper or iron. CP¹ and CP² each independently represent a cyclopentadienyl ring which may have a substituent.

The number of substituents of the cyclopentadienyl ring is preferably 0 to 5, and more preferably 1.

The substituent that the cyclopentadienyl ring can have is preferably -P(R^{P})₂.

P in the "-P(R^{P})₂" is a phosphorus atom, and two R^{P}s each independently represent a hydrogen atom or a substituent. The substituent is preferably an organic group, and more preferably an alkyl group or a phenyl group. The alkyl group may be either linear or branched. The number of carbon atoms in the alkyl group is preferably 1 to 3.

In the formula (F2), CP¹ represents a cyclopentadienyl ring which may have a substituent.

CP¹ in the formula (F2) has the same meaning as CP¹ in the formula (F1), and preferred embodiments thereof are also the same.

The three R^{Q}s each independently represent -CO, a halogen atom, or -PPh₃.

P in the "-PPh₃" is a phosphorus atom, and Ph is a phenyl group which may have a substituent. The substituent that the phenyl group can have is preferably an alkyl group. The alkyl group may be either linear or branched, and the number of carbon atoms of the alkyl is preferably 1 to 3.

The number of substituents of the phenyl group is preferably 0 to 5.

**Examples** of the copper compound include cuprous chloride, cuprous bromide, cuprous iodide, cuprous cyanide, cuprous oxide, and cuprous perchlorate.

The living polymerization catalyst may be used alone as one kind, or two or more kinds thereof may be used.

The content of the living polymerization catalyst is preferably 0.00001 to 5 mass%, and more preferably 0.00005 to 2 mass% with respect to the total solid content of the mixture for living polymerization.

Examples of the polymerization initiator include 1-chloroethylbenzene, 1-phenylethylbromide, chloroform, carbon tetrachloride, 2-chloropropionitrile, α,α'-dichloroxylene, α,α'-dibromoxylene, hexakis(α-bromomethyl) benzene, and alkyl ester compounds of a halogenated carboxylic acid (for example, diethylchloromalonic acid, 2-chloropropionic acid, 2-bromopropionic acid, 2-chloroisobutyric acid, 2-bromoisobutyric acid, and the like).

The polymerization initiator may be used alone as one kind, or two or more kinds thereof may be used.

The content of the polymerization initiator is preferably 0.01 to 1 mass% with respect to the total mass of the monomer (for example, the silsesquioxane having a polymerizable group and the monomer M).

Examples of the solvent include organic solvents such as tetrahydrofuran, ethyl acetate, toluene, acetone, dimethylformamide, ketones, and alcohols, and water.

The solvent may be used alone as one kind, or two or more kinds thereof may be used.

The content of the solvent is preferably 0 to 95 mass%, and more preferably 10 to 90 mass% with respect to the total mass of the mixture for living polymerization.

Examples of the co-catalyst include a triamine compound such as pentamethyldiethylenetriamine, a phosphine compound such as diphenylphosphine oxide, a triazine compound having at least one triazine ring, a benzotriazole compound having at least one benzotriazole ring, and an imidazole compound having at least one imidazole ring (for example, 1-methylimidazole and the like).

As the co-catalyst, phosphine compounds such as diphenylphosphine oxide, Tri(m-tolyl)phosphine, and Tri(o-tolyl)phosphine, or triamine compounds such as N,N,N',N",N"-pentamethyldiethylenetriamine, tripropylamine, and Tris(2-pyridylmethyl)amine are preferable.

Examples of the co-catalyst include Tinuvin 400, Tinuvin 384-2, and Tinuvin 477 (all manufactured by BASF).

The co-catalyst may be used alone as one kind, or two or more kinds thereof may be used.

The content of the co-catalyst is preferably 0.000001 to 10 mass%, and more preferably 0.00001 to 5 mass% with respect to the total solid content of the mixture for living polymerization.

The content of the co-catalyst is preferably 0.1 to 1000 mass% with respect to the total mass of the catalyst.

The reaction time of living polymerization is preferably 0.5 to 24 hours, and more preferably 1 to 10 hours.

The reaction temperature of living polymerization is preferably 25 to 100°C, and more preferably 25 to 60°C.

The polymer S may be used alone as one kind, or two or more kinds thereof may be used.

The content of the polymer S is preferably 10 to 90 mass%, more preferably 20 to 80 mass%, and still more preferably 30 to 60 mass% with respect to the total solid content of the composition.

### <Compound X>

The composition of the first embodiment contains the compound X.

The compound X is a compound selected from the group consisting of the monomer M and the polymer P of the monomers M.

### (Monomer M)

The composition of the first embodiment may contain the monomer M.

The monomer M is a monomer selected from the group consisting of polyalkylene glycol di(meth)acrylate and urethane (meth)acrylate.

The polyalkylene glycol di(meth)acrylate is a monomer having (meth)acryloyl groups at both terminals of a polyalkylene glycol chain.

The urethane (meth)acrylate may also be an oligomer. The polyalkylene glycol di(meth)acrylate is preferably a compound represented by formula (II).

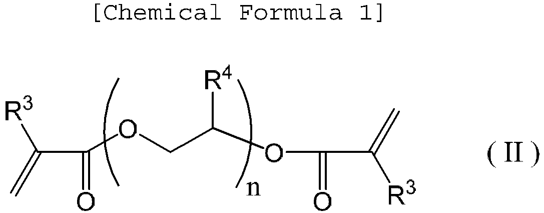

In the formula (II),
n represents a number of 0 to 30.
R³ and R⁴ each independently represent a hydrogen atom or a methyl group.
A plurality of R³s may be the same or different. When there are a plurality of R⁴s, the plurality of R⁴s may be the same or different.
n is preferably a number of 1 to 25, more preferably a number of 4 to 25, and still more preferably a number of 9 to 20.

Examples of the polyalkylene glycol di(meth)acrylate include NK ester bifunctional polyethylene glycol acrylates (A-200, A-400, A-600, A-1000, and the like, manufactured by Shin-Nakamura Chemical Co., Ltd.), LIGHT ACRYLATE 4EG-A, LIGHT ACRYLATE 9EG-A, and LIGHT ACRYLATE 14EG-A (all manufactured by Kyoeisha Chemical Co., Ltd.).

The molecular weight of the polyalkylene glycol di(meth)acrylate is preferably less than 3000, more preferably 2000 or less, and still more preferably 1500 or less. The lower limit is preferably 400 or more, and more preferably 600 or more.

The urethane (meth)acrylate is a monomer having a urethane bond and a (meth)acryloyl group.

The urethane (meth)acrylate may also be an oligomer.

The number of (meth)acryloyl groups of the urethane (meth)acrylate is preferably 1 or 2 or more, and more preferably 2 or 3. In other words, for example, the urethane (meth)acrylate may be either a urethane di(meth)acrylate or a urethane tri(meth)acrylate.

The number of urethane bonds of the urethane (meth)acrylate is preferably 1 or 2 or more, more preferably 2 or more, and still more preferably 3 or more. The upper limit is preferably 100 or less, and more preferably 50 or less.

The urethane (meth)acrylate is preferably obtained by reacting a polyol, a diisocyanate, and a (meth)acrylate having a hydroxyl group.

Examples of the polyol include 1,6-hexane diglycidyl ether, polyethylene glycol, polypropylene glycol, polytetramethylene glycol, polycaprolactone diol, polycarbonate diol, polybutadiene polyol, and polyester diol.

Examples of the diisocyanate include toluene diisocyanate, xylene diisocyanate, diphenylmethane diisocyanate, tetramethylxylene diisocyanate, hexamethylene diisocyanate, isophorone diisocyanate, and dicyclohexylmethane diisocyanate.

Examples of the (meth)acrylate having a hydroxyl group include 2-hydroxyethyl (meth)acrylate, 2-hydroxypropyl (meth)acrylate, 4-hydroxybutyl (meth)acrylate, pentaerythritol (meth)acrylate, and caprolactone-modified 2-hydroxyethyl (meth)acrylate.

The urethane (meth)acrylate is preferably a compound represented by formula (I).

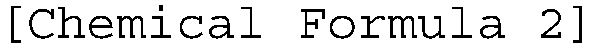

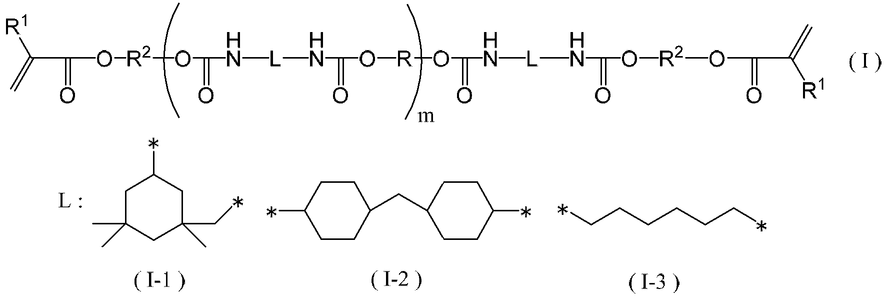

In the formula (I), m represents a number of 0 to 9. R represents a bifunctional polyester polyol residue or a bifunctional polyether polyol residue. R¹ represents a hydrogen atom or a methyl group. R² represents an alkylene group having 2 to 4 carbon atoms. L represents a group represented by any of formulas (I-1) to (I-3).

In the formula (I), R represents a bifunctional polyester polyol residue or a bifunctional polyether polyol residue.

The bifunctional polyester polyol residue is a group obtained by removing two hydroxyl groups (OH) from a polyester polyol having the two hydroxyl groups. Examples of the polyester polyol include polyester polyols obtained by dehydration condensation of adipic acid or phthalic acid with a glycol having 2 to 6 carbon atoms.

The bifunctional polyether polyol residue is a group obtained by removing two hydroxyl groups (OH) from a polyether polyol having the two hydroxyl groups. Examples of the polyether polyol include polyethylene glycol and polypropylene glycol.

In the formula (I), R² represents an alkylene group having 2 to 4 carbon atoms.

The alkylene group may be either linear or branched.

L represents a group represented by any of formulas (I-1) to (I-3).

In the formulas (I-1) to (I-3), * represents a bonding position.

When there are a plurality of groups represented by the same symbol **in** the formula (I), the plurality of groups represented by the same symbol may be the same or different from each other.

Examples of the urethane (meth)acrylate include CN9002, CN910A70, CN9167, CN9170A86, CN9200, CN963B80, CN964A85, CN965, CN966H90, CN9761, CN9761A75, CN981, CN991, and CN996 (all manufactured by Sartomer ARKEMA); UF8001G, UF8002G, UF8003G, and DAUA-167 (all manufactured by Kyoeisha Chemical Co., Ltd.); SC2404, SC2565, PU-2560, and UA-5210 (all manufactured by Miwon Specialty Chemical Co., Ltd.); and UA-122P and UA-232P (all manufactured by Shin-Nakamura Chemical Co., Ltd.).

The weight average molecular weight of the urethane (meth)acrylate is preferably less than 4000, more preferably 3800 or less, and still more preferably 3500 or less. The lower limit is preferably 300 or more, and more preferably 500 or more.

The monomer M may be used alone as one kind, or two or more kinds thereof may be used.

The content of the monomer M is preferably 1 to 99 mass%, more preferably 5 to 90 mass%, and still more preferably 10 to 70 mass% with respect to the total solid content of the composition.

### (Polymer P)

The composition of the first embodiment may contain the polymer P.

The polymer P is a polymer of the monomers M. The polymer P is preferably a polymer obtained by polymerization via a polymerizable group of the monomer M (for example, a (meth)acryloyl group).

The polymer P is a so-called prepolymer, and is a polymer that can be further cured by a curing treatment such as a light irradiation treatment when a hard coat layer is formed.

The polymer P preferably has a polymerizable group. Examples of the polymerizable group of the polymer P include, among the polymerizable groups of the monomer M, the polymerizable group remaining when the polymer P is formed.

The monomer M is as described above.

In the molecular weight distribution curve of the polymer P obtained by the GPC method, the peak top molecular weight of the polymer P is 3,500 or more, and preferably 4,000 or more. The upper limit is preferably 600,000 or less, more preferably 45,000 or less, and still more preferably 25,000 or less.

When the polymer P has a plurality of peak top molecular weights, it is preferable that at least one of the plurality of peak top molecular weights satisfies the above peak top molecular weight range, and it is more preferable that all the peak top molecular weights satisfy the above peak top molecular weight range.

In the molecular weight distribution curve of the polymer P obtained by the GPC method, the molecular weight of the polymer P is preferably in a region of 2,000 or more, more preferably in a region of 4,000 or more, still more preferably in a region of 4,500 or more, and particularly preferably in a region of 5,000 or more. The upper limit is preferably in a region of 2,000,000 or less, more preferably in a region of 400,000 or less, still more preferably in a region of 50,000 or less, and particularly preferably in a region of 30,000 or less.

The peak top molecular weight of the polymer P and the molecular weight of the polymer P can be measured by the same methods as the measurement methods for the polymer S described above.

Examples of the method for producing the polymer P include a method using the monomer M in place of the silsesquioxane having a polymerizable group in the method for producing the polymer S described above.

The polymer P may be used alone as one kind, or two or more kinds thereof may be used.

The content of the polymer P is preferably 1 to 99 mass%, more preferably 5 to 90 mass%, and still more preferably 10 to 70 mass% with respect to the total solid content of the composition.

### <Polymerization Initiator>

The composition of the first embodiment may contain the polymerization initiator.

Examples of the polymerization initiator include a photopolymerization initiator and a thermal polymerization initiator, and a photopolymerization initiator is preferable.

Examples of the polymerization initiator include Omnirad 127, 184, 907, 651, 1700, 1800, 819, and 369 and TPO (manufactured by IGM Resins B.V.).; DAROCUR 1173 (manufactured by Sigma-Aldrich); Esacure KIP150 and TZT (manufactured by Nihon Siberhegner K.K.); KAYACURE BMS and KAYACURE DMBI (manufactured by Nippon Kayaku Co., Ltd.); and Tinuvin 400, Tinuvin 405, Tinuvin 460, Tinuvin 477, Tinuvin 479, and Tinuvin 1577 (manufactured by BASF).

Examples of the cationic polymerization initiator include onium salts composed of one or more cations selected from the group consisting of aromatic sulfonium, aromatic iodonium, aromatic diazonium, and pyridinium, and one or more anions selected from the group consisting of BF4⁻, PF⁶-, SbF⁶-, AsF⁶-, CF3SO³⁻, (CF₃SO₂)₂N⁻, and B(C₆F₅)⁴⁻; and thermal cationic polymerization initiators such as aluminum complexes such as aluminum chloride.

The polymerization initiator may be used alone as one kind, or two or more kinds thereof may be used.

The content of the polymerization initiator is preferably 0.001 to 5 mass%, and more preferably 0.01 to 5 mass% with respect to the total solid content of the composition.

### <Sensitizer>

The composition of the first embodiment may contain a sensitizer.

When the composition contains a polymerization initiator, the composition preferably further contains a sensitizer.

Examples of the sensitizer include ANTHRACURE series (manufactured by KAWASAKI KASEI CHEMICALS LTD.).

The sensitizer may be used alone as one kind, or two or more kinds thereof may be used.

The content of the sensitizer is preferably 0.001 to 5 mass%, and more preferably 0.05 to 2 mass% with respect to the total solid content of the composition.

<Surfactant>

The composition of the first embodiment may contain a surfactant.

Examples of the surfactant include silicone compounds such as silicone oil.

Examples of the surfactant include DOWSIL series (manufactured by Dow Inc.).

The surfactant may be used alone as one kind, or two or more kinds thereof may be used.

The content of the surfactant is preferably 0.001 to 5 mass%, and more preferably 0.01 to 0.5 mass% with respect to the total solid content of the composition.

### <Ultraviolet Absorber>

The composition of the first embodiment may contain an ultraviolet absorber.

Examples of the ultraviolet absorber include a triazine compound and a benzotriazole compound.

Examples of the triazine compound and the benzotriazole compound include a triazine compound and a benzotriazole compound that can be contained in the above-described mixture for living polymerization. Therefore, when the mixture for living polymerization is used for preparing the composition of the first embodiment, the triazine compound and the benzotriazole compound contained in the mixture for living polymerization may be used as the ultraviolet absorber in the composition of the first embodiment.

The ultraviolet absorber may be used alone as one kind, or two or more kinds thereof may be used.

The content of the ultraviolet absorber is preferably 0.01 to 5 mass%, and more preferably 0.1 to 3 mass% with respect to the total solid content of the composition.

### <Solvent>

The composition of the first embodiment may contain a solvent.

Examples of the solvent include water and an organic solvent.

Examples of the organic solvent include alcohol-based solvents, ketone-based solvents such as methyl ethyl ketone, ether-based solvents such as tetrahydrofuran, ester-based solvents, hydrocarbon-based solvents, halogenated hydrocarbon-based solvents, amide-based solvents, sulfone-based solvents, and sulfoxide-based solvents.

The solvent may be used alone as one kind, or two or more kinds thereof may be used.

The content of the solvent is preferably 10 to 90 mass%, and more preferably 30 to 80 mass% with respect to the total mass of the composition.

### <Other Components>

The composition of the first embodiment may contain other components in addition to the various components.

Examples of the other components include various components that can be contained in the mixture for living polymerization, reactants and decomposition products thereof, silsesquioxane having no polymerizable group, inorganic oxide particles (excluding silsesquioxane having a polymerizable group and silsesquioxane having no polymerizable group), an antiaging agent, a coating film modifier, a light stabilizer, an antioxidant, a coloring inhibitor, a dye, a filler, and an internal mold release agent.

### <Preferred Embodiment>

In the composition of the first embodiment, it is preferable that the composition of the first embodiment contains silsesquioxane having a polymerizable group, and satisfies requirement A1; or
the composition of the first embodiment does not contain silsesquioxane having a polymerizable group and satisfies requirement B1.

As requirement A1, requirement A2 or requirement A3 is preferable, and requirement A4 is more preferable.

As requirement B1, requirement B2 or requirement B3 is preferable, and requirement B4 is more preferable.

Requirement A1: the total content of the polymer S and the silsesquioxane having a polymerizable group is 30 mass% or more with respect to the total content of the polymer S, the silsesquioxane having a polymerizable group, and the compound X.

Requirement A2: the total content of the polymer S and the silsesquioxane having a polymerizable group is 50 mass% or more with respect to the total content of the polymer S, the silsesquioxane having a polymerizable group, and the compound X.

Requirement A3: the total content of the polymer S and the silsesquioxane having a polymerizable group is 30 to 90 mass% with respect to the total content of the polymer S, the silsesquioxane having a polymerizable group, and the compound X.

Requirement A4: the total content of the polymer S and the silsesquioxane having a polymerizable group is 50 to 70 mass% with respect to the total content of the polymer S, the silsesquioxane having a polymerizable group, and the compound X.

Requirement B1: the content of the polymer S is 5 mass% or more with respect to the total content of the polymer S and the compound X.

Requirement B2: the content of the polymer S is 10 mass% or more with respect to the total content of the polymer S and the compound X.

Requirement B3: the content of the polymer S is 5 to 20 mass% with respect to the total content of the polymer S and the compound X.

Requirement B4: the content of the polymer S is 10 to 15 mass% with respect to the total content of the polymer S and the compound X.

When the composition of the first embodiment contains the silsesquioxane having a polymerizable group, the total content of the polymer S, the silsesquioxane having a polymerizable group, and the compound X is preferably 80 to 100 mass%, more preferably 95 to 100 mass%, and still more preferably 98 to 100 mass% with respect to the total solid content of the composition.

When the composition of the first embodiment does not contain the silsesquioxane having a polymerizable group, the total content of the polymer S and the compound X is preferably 80 to 100 mass%, more preferably 95 to 100 mass%, and still more preferably 98 to 100 mass% with respect to the total solid content of the composition.

### [Second Embodiment]

The composition of the second embodiment contains silsesquioxane having a polymerizable group; and
a polymer P of monomers M selected from the group consisting of polyalkylene glycol di(meth)acrylate and urethane (meth)acrylate, in which,

in a molecular weight distribution curve of the polymer P obtained by gel permeation chromatography, the peak top molecular weight of the polymer P is 3500 or more.

In other words, the composition of the second embodiment contains silsesquioxane having a polymerizable group and the polymer P.

The silsesquioxane having a polymerizable group, the monomer M, and the polymer P are as described in the first embodiment.

The second embodiment may contain, in addition to the various components described above, a component selected from the group consisting of the polymerization initiator, sensitizer, surfactant, ultraviolet absorber, solvent, and other components described in the first embodiment.

### <Preferred Embodiment>

It is preferable that the composition of the second embodiment further contains the monomer M selected from the group consisting of polyalkylene glycol di(meth)acrylate and urethane (meth)acrylate and satisfies requirement C1; or
does not further contain the monomer M selected from the group consisting of polyalkylene glycol di(meth)acrylate and urethane (meth)acrylate is not contained and satisfies requirement D1.

As requirement C1, requirement C2 or requirement C3 is preferable, and requirement C4 is more preferable.

As requirement D1, requirement D2 or requirement D3 is preferable, and requirement D4 is more preferable.

Requirement C1: the total content of the polymer P and the monomer M is 30 mass% or more with respect to the total content of the polymer P, the monomer M, and the silsesquioxane having a polymerizable group.

Requirement C2: the total content of the polymer P and the monomer M is 50 mass% or more with respect to the total content of the polymer P, the monomer M, and the silsesquioxane having a polymerizable group.

Requirement C3: the total content of the polymer P and the monomer M is 30 to 90 mass% with respect to the total content of the polymer P, the monomer M, and the silsesquioxane having a polymerizable group.

Requirement C4: the total content of the polymer P and the monomer M is 50 to 70 mass% with respect to the total content of the polymer P, the monomer M, and the silsesquioxane having a polymerizable group.

Requirement D1: the content of the polymer P is 10 mass% or more with respect to the total content of the polymer P and the silsesquioxane having a polymerizable group.

Requirement D2: the content of the polymer P is 20 mass% or more with respect to the total content of the polymer P and the silsesquioxane having a polymerizable group.

Requirement D3: the content of the polymer P is 10 to 80 mass% with respect to the total content of the polymer P and the silsesquioxane having a polymerizable group.

Requirement D4: the content of the polymer P is 20 to 70 mass% with respect to the total content of the polymer P and the silsesquioxane having a polymerizable group.

When the composition of the second embodiment contains the monomer M, the total content of the polymer P, the monomer M, and the silsesquioxane having a polymerizable group is preferably 80 to 100 mass%, more preferably 95 to 100 mass%, and still more preferably 98 to 100 mass% with respect to the total solid content of the composition.

When the composition of the second embodiment does not contain the monomer M, the total content of the polymer P and the silsesquioxane having a polymerizable group is preferably 80 to 100 mass%, more preferably 95 to 100 mass%, and still more preferably 98 to 100 mass% with respect to the total solid content of the composition.

### [Method for Producing Composition]

Examples of the method for producing the compositions of the first embodiment and the second embodiment include a method in which various components that can be contained in the composition of the first embodiment or the second embodiment described above are mixed at once, and a method in which various components are divided and mixed stepwise.

In addition, the composition of the first embodiment or the second embodiment may be prepared using a solution obtained by living polymerization of the mixture for living polymerization. In other words, when the liquid is used, various components contained in the liquid are brought into the composition of the first embodiment or the second embodiment.

The compositions of the first embodiment and the second embodiment are suitably used as a composition for forming a hard coat layer on a substrate (a composition for forming a hard coat layer).

As the substrate, a spectacle lens substrate described later is preferable.

### [Spectacle Lens]

The hard coat layer formed using the compositions of the first embodiment and the second embodiment may be used for a spectacle lens.

As the spectacle lens, a spectacle lens including a spectacle lens substrate (for example, a spectacle lens substrate or the like) and a hard coat layer formed using the compositions of the first embodiment and the second embodiment, disposed on the spectacle lens substrate, is preferable.

Fig. 1 is a sectional view of an embodiment of a spectacle lens.

A spectacle lens 10 shown in Fig. 1 includes a spectacle lens substrate 12, primer layers 14 disposed on both surfaces of the spectacle lens substrate 12, and hard coat layers 16 disposed on both surfaces of the primer layers 14. The hard coat layer 16 is a layer formed using the composition of the first embodiment or the second embodiment.

The spectacle lens 10 includes the primer layers 14, but is not limited to this form, and may not include the primer layer 14. Also, in the spectacle lens 10, the primer layers 14 are disposed on both surfaces of the spectacle lens substrate 12, but the primer layer 14 may be disposed only on one surface of the spectacle lens substrate 12. Further, in the spectacle lens 10, the hard coat layers 16 are disposed on both surfaces of the primer layers 14, but the hard coat layer 16 may be disposed only on one surface of the primer layer 14.

Hereinafter, each member that can be included in the spectacle lens 10 will be described in detail.

### <Spectacle Lens Substrate>

Examples of the type of the spectacle lens substrate include a finished lens obtained by optically finishing both a convex surface and a concave surface and molding according to a desired power.

Examples of the type of resin constituting the spectacle lens substrate include (meth)acrylic resins, thiourethane-based resins, allyl-based resins, episulfide-based resins, polycarbonate-based resins, polyurethane-based resins, polyester-based resins, polystyrene-based resins, polyethersulfone-based resins, poly-4-methylpentene-1-based resins, diethylene glycol bisallyl carbonate-based resins (CR-39), and polyvinyl chloride-based resins.

The thickness of the spectacle lens substrate is preferably 1 to 30 mm in terms of handleability.

The refractive index of the spectacle lens substrate is not particularly limited.

The spectacle lens substrate may be opaque or colored as long as it has translucency.

<Hard Coat Layer>

The hard coat layer is a layer disposed on the spectacle lens substrate, and is a layer that imparts scratch resistance to the spectacle lens substrate.

The hard coat layer is a layer formed by the composition of the first embodiment or the second embodiment.

Examples of the method for forming the hard coat layer include a method in which the composition of the first embodiment or the second embodiment is applied onto a spectacle lens substrate to form a coating film, and the coating film is subjected to a curing treatment such as a light irradiation treatment or a heat treatment.

After the coating film is formed, a drying treatment such as a heat treatment may be performed to remove the solvent from the coating film as necessary.

Examples of the method for applying the composition of the first embodiment or the second embodiment onto the spectacle lens substrate include known methods (for example, a dipping coating method, a spin coating method, a spray coating method, an inkjet coating method, a flow coating method, and the like).

For example, when a dipping coating method is used, a coating film having a predetermined film thickness can be formed on the spectacle lens substrate by immersing the spectacle lens substrate in the composition of the first embodiment or the second embodiment, and then pulling up and drying the spectacle lens substrate.

The film thickness of the coating film formed on the spectacle lens substrate can be appropriately adjusted.

As the conditions for the light irradiation treatment, suitable conditions can be selected depending on the type of polymerization initiator to be used.

Examples of the type of light at the time of light irradiation include ultraviolet rays and visible rays. Examples of the light source include a high-pressure mercury lamp.

The integrated light amount at the time of light irradiation is preferably 100 to 3000 mJ/cm², and more preferably 100 to 1500 mJ/cm² in terms of productivity and curability of the coating film.

The film thickness of the hard coat layer is preferably 1 µm or more, more preferably 5 µm or more, and still more preferably 10 µm or more. The upper limit is preferably 30 µm or less.

The film thickness is an average film thickness, and is determined by measuring film thicknesses at arbitrary five points of the hard coat layer and arithmetically averaging the measured values, as the measurement method.

### <Primer Layer>

The spectacle lens may further include a primer layer disposed between the substrate and the hard coat layer.

The primer layer is a layer that improves the adhesion of the hard coat layer to the substrate.

Examples of the material constituting the primer layer include a resin.

Specific examples thereof include urethane-based resins, epoxy-based resins, phenol-based resins, polyimide-based resins, polyester-based resins, bismaleimide-based resins, and polyolefin-based resins.

Examples of the method for forming the primer layer include known methods.

Specific examples thereof include a method **in** which a composition for forming a primer layer containing a resin is applied onto a substrate and subjected to a curing treatment as necessary to form a primer layer.

In the case of producing a spectacle lens having a spectacle lens substrate, a primer layer, and a hard coat layer in this order, it is preferable that a composition for forming a primer layer is applied onto the spectacle lens substrate to form a first coating film, the composition of the first embodiment or the second embodiment is applied onto the first coating film to form a second coating film, and then the first coating film and the second coating film are subjected to a curing treatment to form a primer layer and a hard coat layer on the spectacle lens substrate in this order. In the case of the above method, adhesion between the primer layer and the hard coat layer is likely to be excellent.

Also, heat treatment may be performed in the formation of the first coating film and the formation of the second coating film as necessary. As the curing treatment, the curing treatment in the hard coat layer described above is preferable. Among them, heat treatment is preferable as the curing treatment for the first coating film.

The thickness of the primer layer may be 0.3 to 2 µm.

<Antireflection Layer>

The spectacle lens may include an antireflection layer.

The antireflection layer is a layer having a function of preventing reflection of incident light.

Specifically, it has low reflection characteristics (broadband low reflection characteristics) over the entire visible region of 400 to 700 nm.

The structure of the antireflection layer may be a single layer structure or a multilayer structure.

The antireflection layer is preferably an inorganic antireflection layer. The inorganic antireflection layer means an antireflection layer composed of an inorganic compound.

The antireflection layer having a multilayer structure may have a structure in which a low refractive index layer and a high refractive index layer are alternately laminated.

Examples of the material constituting the high refractive index layer include titanium, zircon, aluminum, niobium, tantalum, and lanthanum oxide. Examples of the material constituting the low refractive index layer include silica oxide.

Examples of the method for producing the antireflection layer include dry methods such as a vacuum vapor deposition method, a sputtering method, an ion plating method, an ion beam assist method, and a CVD method.

### EXAMPLES

Hereinafter, the composition of the present disclosure will be described in more detail with reference to Examples and Comparative Examples, but the composition of the present disclosure is not limited by these Examples in any way.

### [Example 1]

### <Primer Layer>

### (Preparation of Composition for Forming Primer Layer)

Pure water (83 parts by mass), UW-1013D-C1 (manufactured by UBE Corporation, solid content: 34 mass%) (113.4 parts by mass) as an aqueous urethane dispersion, CARBODILITE V-02 (manufactured by Nisshinbo Chemical Inc., solid content: 39.9%) (2.0 parts by mass), a 10 mass% DOWSIL 501W Additive aqueous solution (0.8 parts by mass) as a surfactant, and a 10 mass% DOWSIL L-7604 aqueous solution (0.8 parts by mass) were added and stirred to prepare a composition for forming a primer layer having a solid content concentration of 20 mass%.

### - 10% DOWSIL 501W Additive aqueous solution -

Pure water (9 parts by mass) and DOWSIL 501W Additive (manufactured by Dow Inc.) (1 part by mass) were added and stirred to prepare a 10 mass% DOWSIL 501W Additive aqueous solution.

### - 10% DOWSIL L-7604 aqueous solution -

Pure water (9 parts by mass) and DOWSIL L-7604 (manufactured by Dow Inc.) (1 part by mass) were added and stirred to prepare a 10 mass% DOWSIL L-7604 aqueous solution.

### (Formation of Primer Layer)

As the spectacle lens substrate, a spectacle lens substrate having a refractive index of 1.74 (S-7.00D, manufactured by Nikon-Essilor Co., Ltd.) was used. A composition for forming a primer layer (1.0 mL) was dropped on one surface of the spectacle lens substrate and spin-coated. In spin coating, the spectacle lens substrate to which the composition for forming a primer layer had been applied was rotated at 500 rpm for 10 seconds, at 2000 rpm for 0.5 seconds, and finally so as to be 0 rpm over 1 second in this order. Next, the obtained substrate was heated at 90°C for 20 minutes to form a first coating film.

A first coating film was also formed on the other surface of the spectacle lens substrate on the obtained substrate in the same procedure as described above. The obtained substrate was used as a spectacle lens substrate with a first coating film.

### <Hard Code Layer>

### (Preparation of Prepolymer Liquid)

A copper complex solution (4.5 parts by mass), AC-SQ TA-100 (manufactured by Toagosei Co., Ltd., 20 parts by mass), N,N,N',N",N''-pentamethyldiethylenetriamine (manufactured by Tokyo Chemical Industry Co., Ltd., 0.61 parts by mass), and ethyl 2-chloropropionate (manufactured by Tokyo Chemical Industry Co., Ltd., 0.017 parts by mass) were added, and the mixture was stirred (stirring time: 1 hour) to prepare Prepolymer Liquid 1-1.

### - Copper complex solution -

Tetrahydrofuran (89 parts by mass), copper(I) bromide (manufactured by Tokyo Chemical Industry Co., Ltd., 0.05 parts by mass) and diphenylphosphine oxide (manufactured by Tokyo Chemical Industry Co., Ltd., 5.28 parts by mass) were added, and the mixture was stirred to prepare a copper complex solution.

### - 10 mass% Ominirad 127 solution -

Methyl ethyl ketone (18.0 parts by mass) and Ominirad 127 solution (manufactured by IGM Resins B.V., 2.0 parts by mass) were added, and the mixture was stirred to prepare a 10 mass% Ominirad 127 solution.

### - 10 mass% L7001 solution -

Methyl ethyl ketone (9 parts by mass) and DOWSIL L-7001 (manufactured by Dow Inc., 1 part by mass) were added, and the mixture was stirred to prepare a 10 mass% L7001 solution.

### (Preparation of Composition for Forming Hard Coat Layer)

Prepolymer Liquid 1-1 (12.6 parts by mass), methyl ethyl ketone (0.58 parts by mass), tetrahydrofuran (6.5 parts by mass), NK Ester A-600 (manufactured by Shin-Nakamura Chemical Co., Ltd.) (10 parts by mass), a 10 mass% Ominirad 127 solution (manufactured by IGM Resins B.V., 0.202 parts by mass), and a 10 mass% L7001 solution (0.11 parts by mass) were added to prepare a composition for forming a hard coat layer J1.

### (Formation of Hard Code Layer)

On one first coating film of the obtained spectacle lens substrate with a first coating film, the composition for forming a hard coat layer J1 (2.0 mL) was dropped and spin-coated to form a second coating film. In spin coating, rotation was performed at 500 rpm for 10 seconds, at 2000 rpm for 0.5 seconds, and finally so as to be 0 rpm over 1 second in this order.

Thereafter, the first coating film and the second coating film were irradiated with ultraviolet rays (integrated light amount: 0.8 J/cm²) using a high-pressure mercury lamp (Fusion UV, LIGHT HAMMER 6, manufactured by Heraeus) as a light source.

Next, the composition for forming a hard coat layer J1 was dropped on the surface of the obtained substrate on the side opposite to the side on which the composition for forming a hard coat layer J1 was applied under the same conditions as for the side on which the composition for forming a hard coat layer J1 was applied, and spin coating and ultraviolet irradiation were performed. The obtained substrate was heated at 100°C for 20 minutes to obtain a spectacle lens of Example 1 having a hard code layer, a primer layer, a spectacle lens substrate, a primer layer, and a hard code layer in this order.

### [Examples 2 to 4 and 8 to 10, Comparative Examples 1 to 3]

In Examples 2 to 4 and 8 to 10 and Comparative Example 1 to 3, each spectacle lens was obtained in the same procedure as in Example 1 except that various components and their contents were changed to those shown in the following table.

### [Examples 5 to 7]

Each spectacle lens was obtained in the same procedure as in Example 1 except that Prepolymer Liquid 2-1 or 2-2 was prepared and used in place of Prepolymer Liquid 1-1 by the following procedure.

### <Preparation of Prepolymer Liquid 2-1>

Tetrahydrofuran (634.1 parts by mass), copper(I) bromide (manufactured by Tokyo Chemical Industry Co., Ltd., 0.0052 parts by mass), diphenylphosphine oxide (manufactured by Tokyo Chemical Industry Co., Ltd., 0.54 parts by mass), NK Ester A-600 (manufactured by Shin-Nakamura Chemical Co., Ltd., 71.3 parts by mass), and N,N,N',N",N''-pentamethyldiethylenetriamine (manufactured by Tokyo Chemical Industry Co., Ltd., 1.25 parts by mass) were added, and the mixture was stirred for 16 hours.

Next, 581.1 parts by mass of tetrahydrofuran was removed from the resulting liquid using an evaporator (NE-1101, manufactured by TOKYO RIKAKIKAI CO., LTD.) to prepare Prepolymer Liquid 2-1.

### <Preparation of Prepolymer Liquid 2-2>

Prepolymer Liquid 2-2 was obtained in the same procedure as in Prepolymer Liquid 2-1 except that various components and their contents were changed to those shown in the following table.

### [Molecular Weight Analysis of Polymer S and Polymer P]

Molecular weight distribution curves of the polymer S and the polymer P in each prepolymer liquid were created by the above-described method, and peak top molecular weights and molecular weight distributions were measured.

When the prepolymer liquid contained the polymer S, the prepolymer liquid contained at a molar ratio of polymer S: silsesquioxane having polymerizable group = 30: 70 to 80: 20. Also, when the prepolymer liquid contained the polymer P, the prepolymer liquid contained at a molar ratio of polymer P: monomer X = 30: 70 to 40: 60.

The molecular weights of the polymer S and the polymer P were adjusted by various components contained in each prepolymer liquid and the contents thereof, the stirring time when each prepolymer was prepared, the amount of solvent removed, and the like.

### [Interlayer Adhesion]

The interlayer adhesion of the hard coat layer in each spectacle lens was evaluated by the following procedure using a cross-cut tape test.

On the obtained spectacle lens, cuts reaching the spectacle lens substrate were made at intervals of 1 mm from the concave surface side of the sample using a knife to form 25 squares. Next, a scotch tape (manufactured by 3M Company) was strongly pressed against the hard coat layer with a cut, and then the scotch tape was quickly pulled once in a direction of 45° from the surface to which the tape was stuck with a load of 4 kg to peel off the scotch tape. Thereafter, the total number of squares remaining on the substrate (the total number of squares including substrate, primer layer, and hard coat layer) was counted, and the interlayer adhesion of the hard coat layer was evaluated according to the following evaluation criteria.
A: The number of remaining squares is 11 or more
B: The number of remaining squares is 10 or less

In Table 1, the unit of the content of various components is parts by mass.

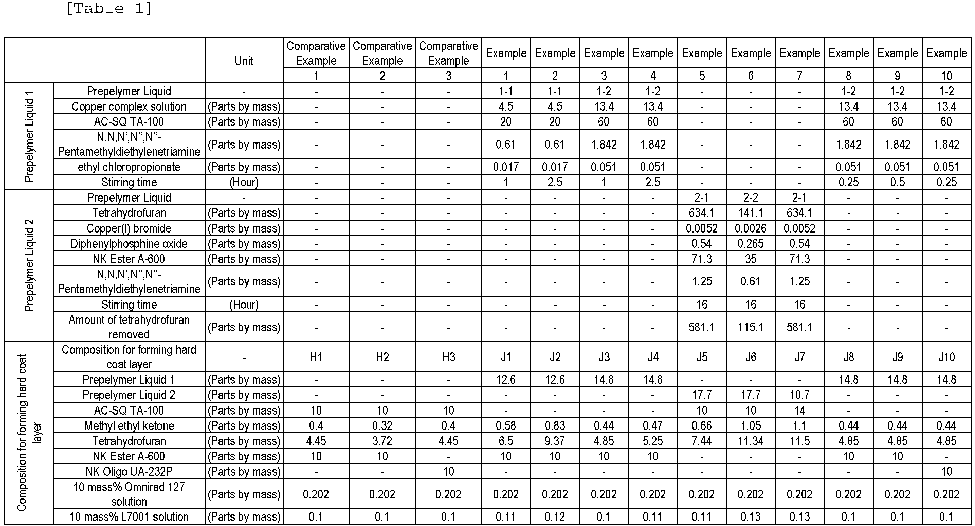

- Copper complex solution: as described above.
- AC-SQ TA-100: silsesquioxane having a polymerizable group, manufactured by Toagosei Co., Ltd.
- NK Ester A-600: polyalkylene glycol di(meth)acrylate, manufactured by Shin-Nakamura Chemical Co., Ltd.
- NK Oligo UA-232P: mixture of urethane (meth)acrylate and AMP-20GY (phenoxydiethylene glycol acrylate) (70: 30 (mass ratio), manufactured by Shin-Nakamura Chemical Co., Ltd.

In Table 2, the meanings of the descriptions are as follows.

The content of various components indicates a value (mass%) based on the total solid content of the composition.

The "Polymer S+TA100" column shows the total content (mass%) of the polymer S and AC-SQ TA-100 based on the total solid content of the composition.

The "Polymer P+A600" column shows the total content (mass%) of the polymer P and NK ester A-600 based on the total solid content of the composition.

In each example, when the composition contains the silsesquioxane having a polymerizable group, the "Requirement A or requirement B" column shows a value of the total content of the polymer S and the silsesquioxane having a polymerizable group with respect to the total content of the polymer S, the silsesquioxane having a polymerizable group, and the compound X (a value of any one of requirement A1 to requirement A4). In addition, when the composition does not contain the silsesquioxane having a polymerizable group, the "Requirement A or requirement B" column shows a value of the content of the polymer S with respect to the total content of the polymer S and the compound X (a value of any one of requirement B1 to requirement B4).

In each example, when the composition contains the monomer M, the "Requirement C or requirement D" column shows a value of the total content of the polymer P and the monomer M with respect to the total content of the polymer P, the monomer M, and the silsesquioxane having a polymerizable group (a value of any one of requirement C1 to requirement C4). In addition, when the composition does not contain the monomer M, the "Requirement C or requirement D" column shows a value of the content of the polymer P with respect to the total content of the polymer P and the silsesquioxane having a polymerizable group (a value of any one of requirement D1 to requirement D4).

The "Mp" column shows the peak top molecular weight of each compound. TA100 had two peak top molecular weights, and components other than TA100 had one peak top molecular weight.

The "Mw" column shows the weight average molecular weight of each compound.

The Mp and molecular weight distribution in "UA232P (urethane (meth)acrylate)" in the table are values of only the urethane (meth)acrylate contained in UA232P, and are not values containing AMP-20GY (phenoxydiethylene glycol acrylate).

The "molecular weight distribution" column shows a region where the molecular weight of each polymer exists (molecular weight range) in the molecular weight distribution curve of each polymer obtained by the GPC method.

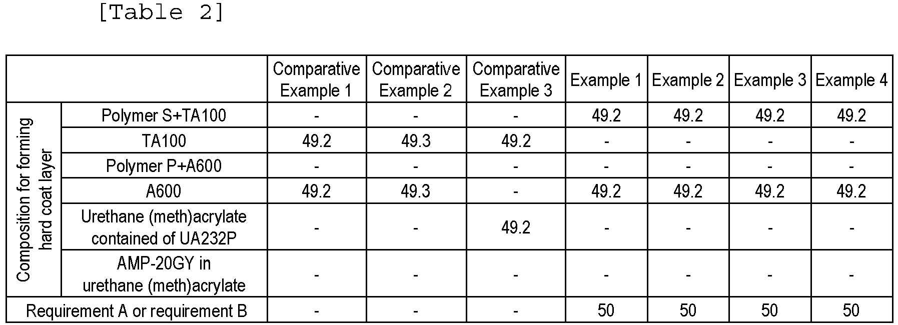

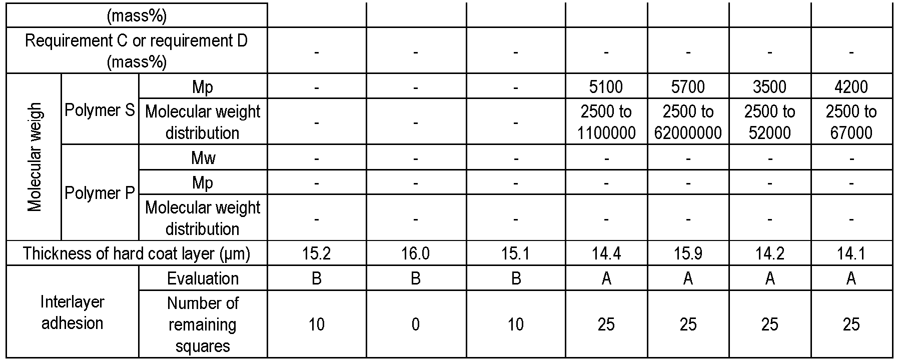

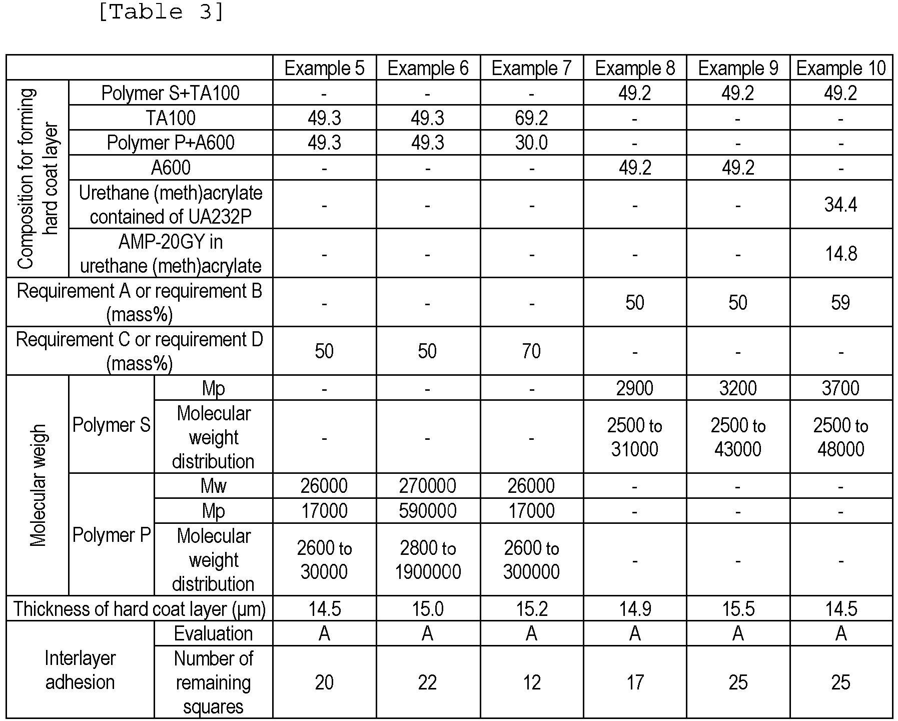

As shown in Table 2, it was confirmed that the composition of the present disclosure can form a hard coat layer excellent in interlayer adhesion.

### DESCRIPTION OF SYMBOLS

- 10: Spectacle lens
- 12: Spectacle lens substrate
- 14: Primer layer
- 16: Hard coat layer

## Claims

1. A composition comprising:
a polymer S of silsesquioxane having a polymerizable group; and
a compound X selected from the group consisting of a monomer M and a polymer P of the monomers M, wherein
the monomer M is selected from the group consisting of polyalkylene glycol di(meth)acrylate and urethane (meth)acrylate,
in a molecular weight distribution curve of the polymer S obtained by gel permeation chromatography, the peak top molecular weight of the polymer S is 2800 or more, and
in a molecular weight distribution curve of the polymer P obtained by gel permeation chromatography, the peak top molecular weight of the polymer P is 3500 or more.

2. The composition according to claim 1, wherein
the composition comprises silsesquioxane having a polymerizable group and satisfies requirement A1; or
the composition does not comprise silsesquioxane having a polymerizable group and satisfies requirement B1,
Requirement A1: the total content of the polymer S and the silsesquioxane having a polymerizable group is 30 mass% or more with respect to the total content of the polymer S, the silsesquioxane having a polymerizable group, and the compound X,
Requirement B1: the content of the polymer S is 5 mass% or more with respect to the total content of the polymer S and the compound X.

3. The composition according to claim 1 or 2, wherein
the composition comprises silsesquioxane having a polymerizable group and satisfies requirement A3; or
the composition does not comprise silsesquioxane having a polymerizable group and satisfies requirement B3,
Requirement A3: the total content of the polymer S and the silsesquioxane having a polymerizable group is 30 to 90 mass% with respect to the total content of the polymer S, the silsesquioxane having a polymerizable group, and the compound X, and
Requirement B3: the content of the polymer S is 5 to 65 mass% with respect to the total content of the polymer S and the compound X.

4. A composition comprising:
silsesquioxane having a polymerizable group; and
a polymer P of monomers M selected from the group consisting of polyalkylene glycol di(meth)acrylate and urethane (meth)acrylate, wherein,
in a molecular weight distribution curve of the polymer P obtained by gel permeation chromatography, the peak top molecular weight of the polymer P is 3500 or more.

5. The composition according to claim 4, wherein the composition comprises the monomer M selected from the group consisting of polyalkylene glycol di(meth)acrylate and urethane (meth)acrylate and satisfies requirement C1; or
the composition does not comprise the monomer M selected from the group consisting of polyalkylene glycol di(meth)acrylate and urethane (meth)acrylate and satisfies requirement D1,
Requirement C1: the total content of the polymer P and the monomer M is 30 mass% or more with respect to the total content of the polymer P, the monomer M, and the silsesquioxane having a polymerizable group, and
Requirement D1: the content of the polymer P is 10 mass% or more with respect to the total content of the polymer P and the silsesquioxane having a polymerizable group.

6. The composition according to claim 4 or 5, wherein the composition comprises the monomer M selected from the group consisting of polyalkylene glycol di(meth)acrylate and urethane (meth)acrylate and satisfies requirement C3; or
the composition does not comprise the monomer M selected from the group consisting of polyalkylene glycol di(meth)acrylate and urethane (meth)acrylate and satisfies requirement D3,
Requirement C3: the total content of the polymer P and the monomer M is 30 to 90 mass% with respect to the total content of the polymer P, the monomer M, and the silsesquioxane having a polymerizable group, and
Requirement D3: the content of the polymer P is 10 to 80 mass% with respect to the total content of the polymer P and the silsesquioxane having a polymerizable group.

7. The composition according to any one of claims 1 to 6, wherein the polyalkylene glycol di(meth)acrylate is a compound represented by formula (II), and
the urethane (meth)acrylate is a compound represented by formula (I), 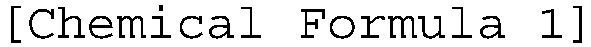 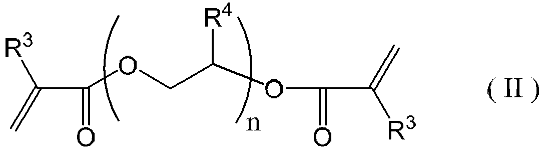 wherein,
n represents a number of 0 to 30, and
R³ and R⁴ each independently represent a hydrogen atom or a methyl group, 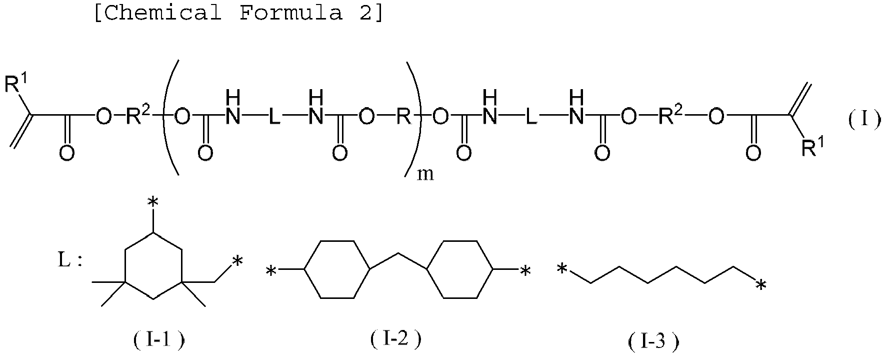
wherein, m represents a number of 0 to 9, R represents a bifunctional polyester polyol residue or a bifunctional polyether polyol residue, R¹ represents a hydrogen atom or a methyl group, R² represents an alkylene group having 2 to 4 carbon atoms, and L represents a group represented by any one of formula (I-1) to formula (I-3).

8. A spectacle lens comprising:
a spectacle lens substrate; and
a hard coat layer formed using the composition according to any one of claims 1 to 7, disposed on the spectacle lens substrate.
